(19) Europäisches Patentamt
European Patent Office
Office européen des brevets

(11) **EP 3 382 605 A1**

(12) **DEMANDE DE BREVET EUROPEEN**

(43) Date de publication:
**03.10.2018 Bulletin 2018/40**

(51) Int Cl.:
***G06K 9/00*** *(2006.01)*     ***G06K 9/20*** *(2006.01)*

(21) Numéro de dépôt: **18165339.5**

(22) Date de dépôt: **30.03.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.03.2017 FR 1752725**

(71) Demandeur: **Idemia Identity & Security France 92130 Issy-les-Moulineaux (FR)**

(72) Inventeurs:
• DURA, Jérémy, Nicolas, Laurent
  92130 ISSY LES MOULINEAUX (FR)
• ROSTAING, Laurent, Patrice
  92130 ISSY LES MOULINEAUX (FR)
• ROUH, Alain
  92130 ISSY LES MOULINEAUX (FR)

(74) Mandataire: **Regimbeau
20, rue de Chazelles
75847 Paris Cedex 17 (FR)**

(54) **PROCÉDÉ D'ANALYSE D'UN DOCUMENT STRUCTURÉ SUSCEPTIBLE D'ÊTRE DÉFORMÉ**

(57) L'invention concerne un procédé d'analyse d'un document structuré susceptible d'être déformé à partir d'une première image et d'une deuxième image du document, comprenant des étapes de :
• mise en correspondance de premiers points d'intérêt extraits dans la première image avec des deuxièmes points d'intérêt d'une image de référence montrant un modèle du document,
• estimation d'une première transformation géométrique tenant compte de déformations du document structuré montré dans la première image par rapport au modèle à partir des correspondances,
• détermination d'au moins une première région à analyser dans la première image, par projection d'au moins une région de référence de l'image de référence au moyen de la première transformation,
• analyse du contenu de la première région déterminée,
• mise en correspondance de troisièmes points d'intérêts extraits dans la deuxième image avec des quatrièmes points d'intérêt extraits dans la première image,
• estimation, à partir des correspondances effectuées dans l'étape précédente, d'une deuxième transformation géométrique tenant compte de déformations du document montré dans la deuxième image par rapport au document montré dans la première image,
• estimation d'une troisième transformation géométrique tenant compte de déformations du document montré dans l'une des deux images, dite image cible, par rapport au premier modèle montré dans l'image de référence, la troisième transformation dépendant de la deuxième transformation,

• détermination d'au moins une deuxième région à analyser dans l'image cible par projection de la région de référence de l'image de référence au moyen de la troisième transformation géométrique,
• analyse du contenu de la deuxième région déterminée.

FIG. 1

EP 3 382 605 A1

**Description**

**DOMAINE DE L'INVENTION**

La présente invention concerne un procédé d'analyse de contenu d'un document structuré susceptible d'être déformé.

**ETAT DE LA TECHNIQUE**

Un document structuré tel qu'un document d'identité, un ticket de jeu, un justificatif de domicile, une facture, un formulaire, etc., est généralement généré sur la base d'un modèle de document. Le document structuré comporte ainsi des informations génériques prédéterminées déjà présentes dans le modèle, mais également des informations personnalisées. Par exemple, dans un passeport, le nom et le prénom du détenteur du passeport constituent des informations personnalisées.

Il est bien connu d'analyser un document structuré par acquisition d'une image d'un tel document et analyse du contenu de cette image acquise. Toutefois, une telle analyse est rendue difficile lorsque le document analysé est déformé, par exemple froissé.

Des procédés, tels que celui décrit dans le document FR 2952218, proposent de prendre en compte des déformations dans l'image d'un document soumis par voie logicielle et projection de lumière structurée, afin de déterminer une image d'un document virtuel identique au document réel mais qui ne serait pas déformé. Pour cela, des points d'intérêt d'une grille bidimensionnelle projetée sur le document sont mis en correspondance avec les points correspondants dans le document froissé, et une déformation du document est calculée sur la base de ces mises en correspondance. De tels procédés présentent cependant l'inconvénient de requérir l'utilisation d'un système de projection de la grille.

De même, le procédé proposé dans le document WO2011/058418 propose de corriger une transformation perspective d'une image acquise montrant un document à analyser. Pour corriger une telle transformation, sont mis en correspondance des points d'intérêt extraits dans l'image acquise avec des points d'intérêts prédéterminés d'une image de référence montrant un modèle de document. Est ensuite calculée une homographie de l'image du document compatible avec ces mises en correspondances de points d'intérêt. Toutefois, il est nécessaire de prédéterminer un grand nombre de points d'intérêts dans l'image de référence pour qu'un grand nombre de mises en correspondance puisse être effectué et ainsi que la transformation soit corrigée de façon précise. Autrement dit, le procédé décrit dans le document WO2011/058418 nécessite une charge de calcul élevée pour caractériser de façon précise les déformations subies par le document.

**EXPOSE DE L'INVENTION**

Un but de l'invention est d'analyser un document structuré déformé au moyen d'un procédé ne requérant pas de système de projection de grille, et qui soit moins coûteux en charge de calcul par rapport aux procédés de l'état de la technique, à précision égale.

Il est dès lors proposé, selon un premier aspect de l'invention, un procédé d'analyse d'un document structuré susceptible d'être déformé à partir d'une première image et d'une deuxième image du document, le procédé étant conforme à la revendication 1.

Dans le procédé selon le premier aspect de l'invention, l'estimation de la transformation entre les deux images acquises est relativement simple à mettre en oeuvre. En effet, cette transformation peut être une homographie dont une approximation peut être prédéterminée. Dès lors, à précision égale, la charge de calcul cumulée nécessaire pour estimer les première et troisième transformation est réduit.

Il est également proposé, selon un deuxième aspect de l'invention, un procédé d'analyse d'un document structuré susceptible d'être déformé à partir d'une première image et d'une deuxième image du document, le procédé étant conforme à la revendication 2.

La quatrième transformation du procédé selon le deuxième aspect de l'invention donne des informations de déformations complémentaires à celles données par la première transformation. Autrement dit, la deuxième image de référence et la deuxième image acquise sont mises à profit pour caractériser de manière plus précise les déformations du document structuré tel que montré dans la première image acquise, par rapport au modèle montré dans la première image de référence. En définitive, le procédé selon le deuxième aspect de l'invention constitue une solution alternative au procédé selon le premier aspect de l'invention pour réduire la charge de calcul par rapport aux procédés de l'état de la technique, à précision égale.

Dans les deux procédés proposés, les étapes de mise en correspondance de points et d'estimation de transformation géométriques sont appliquées aux deux images acquises montrant le même document à analyser. Peuvent ainsi être mis en correspondance des points d'intérêts appartenant à des régions à contenu personnalisé ; ceci constitue une source d'information supplémentaire pour mieux caractériser les déformations subies par le document structuré considéré, et par conséquent affiner l'analyse ultérieure du contenu du document.

Les procédés selon le premier aspect et le deuxième aspect de l'invention peuvent être complétés à l'aide des caractéristiques optionnelles suivantes, prises seules ou en combinaison lorsque cela est techniquement possible.

La première image peut être acquise pendant que le document est éclairé par un rayonnement lumineux dans une première bande de longueurs d'ondes, et la deuxième image être acquise pendant que le document est éclairé par un rayonnement lumineux dans une deuxième bande de longueurs d'ondes, la deuxième bande de longueurs d'onde étant différente de la première bande de longueurs d'onde ou bien la deuxième image étant acquise après la première image.

La première bande de longueurs d'ondes peut être dans le domaine visible, et la deuxième bande de longueurs d'ondes être dans le domaine infrarouge, par exemple le domaine infrarouge proche, ou dans le domaine ultraviolet.

Le procédé peut être mis en oeuvre également à partir d'une troisième image acquise pendant que le document est éclairé par un rayonnement lumineux dans une troisième bande de longueurs d'ondes différente de la deuxième bande de longueurs d'onde, auquel cas la deuxième bande de longueurs d'ondes est dans le domaine infrarouge, la troisième bande de longueurs d'ondes est dans le domaine ultraviolet, et le procédé comprend la détermination d'au moins une troisième région à analyser dans la troisième image, et une analyse du contenu de la troisième région déterminée.

Les images acquises peuvent montrer le document selon des angles de vue différents.

Les images acquises peuvent être acquises successivement au moyen d'un même objectif, ou bien être acquises par des objectifs distincts.

Le procédé peut comprendre en outre, pour une pluralité de régions d'intérêt prédéterminées de la première image de référence, une estimation d'une transformation géométrique locale propre à la région d'intérêt, à partir des deuxièmes points d'intérêts localisés dans la région d'intérêt et des premiers points d'intérêts avec lesquels ces deuxièmes points d'intérêts ont été mis en correspondance, dans lequel la première transformation géométrique est estimée également à partir des transformations géométrique locales propres aux régions d'intérêt de la première image de référence. Alternativement ou à titre complémentaire, le procédé peut en outre comprendre, pour une pluralité de régions d'intérêt personnalisées de la première image acquise, l'estimation d'une transformation géométrique locale propre à la région d'intérêt personnalisée, à partir de quatrièmes points d'intérêt (P4A1) localisés dans la région d'intérêt personnalisée et des troisièmes points d'intérêts (P3A2) avec lesquels ces quatrième points d'intérêts ont été mis en correspondance, dans lequel la deuxième transformation géométrique est estimée également à partir des transformations géométrique locales propres aux régions d'intérêt personnalisées de la première image acquise.

Le fait d'estimer des transformations géométriques locales propres à des régions d'intérêts prédéterminées et/ou personnalisées est beaucoup plus simple que de chercher à estimer une transformation géométrique unique qui couvrirait toute la surface du documents montrés dans l'une des images acquises. En effet, une telle transformation unique serait extrêmement complexe dans le cas où ce document est froissé. Il est comparativement plus facile de travailler région d'intérêt par région d'intérêt, car ces régions d'intérêt sont de dimensions restreintes, et les déformations subies par le document dans chacune de ces régions d'intérêt considérées individuellement sont beaucoup plus simples.

Le procédé peut comprendre en outre une fusion des résultats fournis de chaque étape d'analyse.

La fusion peut comprendre une authentification du document, dans lequel l'authentification réussit à condition qu'une information soit trouvée au cours de l'analyse d'au moins une des images acquises, et non trouvée au cours de l'analyse d'au moins une autre des images acquises.

Chaque analyse peut comprendre une reconnaissance de caractères, et dans lequel la fusion comprend un arbitrage entre les caractères reconnus au cours des étapes d'analyse.

Le procédé selon le deuxième aspect de l'invention peut en outre comprendre, pour une pluralité de région d'intérêt de la deuxième image de référence, un estimation d'une transformation géométrique locale propre à la région d'intérêt, à partir des sixièmes points d'intérêts localisés dans la région d'intérêt et des cinquièmes points d'intérêts avec lesquels ces sixièmes points d'intérêts ont été mis en correspondance, dans lequel la quatrième transformation est estimée également à partir des transformations géométrique locales propres aux régions d'intérêt de la deuxième image de référence.

Il est proposé selon un troisième aspect de l'invention un produit programme d'ordinateur comprenant des instructions de code pour l'exécution du procédé d'analyse selon le premier aspect de l'invention ou selon le deuxième aspect de l'invention, lorsque ce programme est exécuté par un processeur.

Il est par ailleurs proposé selon un quatrième aspect de l'invention un dispositif d'analyse de contenu d'un document structuré susceptible d'être déformé, et configuré pour mettre en oeuvre le procédé selon le premier aspect de l'invention.

Il est par ailleurs proposé selon un cinquième aspect de l'invention un dispositif d'analyse de contenu d'un document structuré susceptible d'être déformé, est configuré pour mettre en oeuvre le procédé selon le deuxième aspect de l'invention.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

- La figure 1 représente un document structuré dans un état déformé.
- La figure 2 illustre de manière schématique un dispositif d'analyse de document structuré, selon un mode de réalisation, comprenant un module d'acquisition d'image.

- La figure 3 illustre de manière schématique un module d'acquisition d'image selon un autre mode de réalisation.
- La figure 4 montre un exemple d'image de référence montrant un modèle de document structuré.
- La figure 5 est un organigramme d'étapes d'un procédé d'analyse de document structuré, selon un premier mode de réalisation de l'invention.
- La figure 6 montre l'image de référence de la figure 4, une première image acquise montrant un document structuré, et des correspondances de points entre les deux images effectuées au cours d'une étape du procédé de la figure 5.
- La figure 7 montre, outre les images de la figure 6, une deuxième image acquise montrant un document structuré, et des correspondances de points entre les deux images acquises, effectuées au cours d'une autre étape du procédé de la figure 5.
- La figure 8 montre de manière schématique des images utilisées au cours de la mise en oeuvre du procédé de la figure 5, ainsi que des transformations géométriques entre ces images.
- La figure 9 est un exemple concret d'image de référence susceptible d'être utilisée au cours de la mise en oeuvre du procédé de la figure 5.
- La figure 10 est un exemple concret d'image acquise au cours de la mise en oeuvre du procédé de la figure 5.
- La figure 11 est un organigramme d'étapes d'un procédé d'analyse de document structuré, selon un deuxième mode de réalisation de l'invention.
- La figure 12 montre de manière schématique des images utilisées au cours d'un procédé d'analyse de document structuré selon un autre mode de réalisation de l'invention, ainsi que des transformations géométriques entre ces images.

Sur l'ensemble des figures, les éléments similaires portent des références identiques.

## DESCRIPTION DETAILLEE DE L'INVENTION

### A. Document structuré

Un document structuré est un document dans lequel au moins une partie des informations d'intérêt à analyser dans le document sont inscrites dans une ou plusieurs zones prédéterminées d'emplacement connu et fixe pour tous les documents d'un même type, par opposition à un document sur papier libre. Les informations portées par le document peuvent aussi bien être sous forme d'écriture manuscrite que de caractères d'imprimerie ou encore être des éléments graphiques comme des images ou des logos. De tels documents sont par exemple des documents d'identité tels que des passeports, cartes d'identités ou permis de conduire, des formulaires, des factures, des justificatifs, des QCM d'examen ou des tickets de jeu. Pour chacun de ces types de documents au moins un modèle de document est susceptible d'être défini.

On trouve dans un document structuré d'un modèle particulier deux types de régions d'intérêt. Certaines de ces régions d'intérêt ont un contenu prédéterminé, que l'on retrouve sur tous les documents du même modèle, et d'autres un contenu personnalisé, c'est-à-dire variable dans des documents du même modèle. Les régions d'intérêt se retrouvent systématiquement au même endroit avec les mêmes contenus dans des documents structurés différents issus du même modèle, en partant de l'hypothèse que ces documents sont dans un état non déformé. Une région d'intérêt peut comprendre un ou plusieurs éléments graphiques prédéterminés (image, logo ou chaine de caractères dans une police prédéterminée).

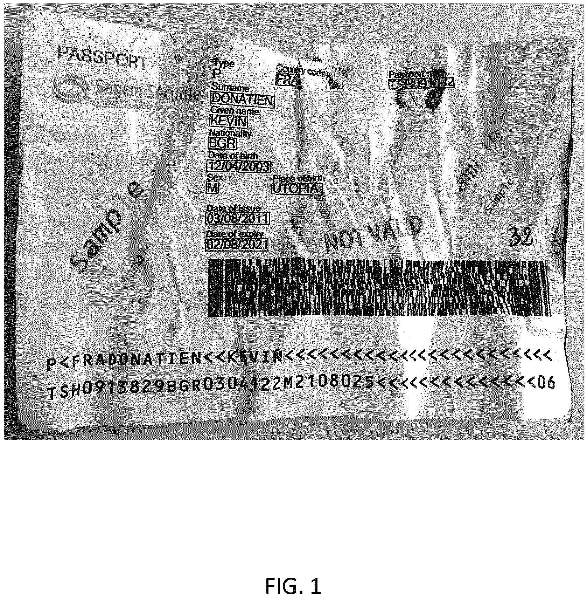

A titre d'exemple, est représenté en **figure 1** un document structuré de type passeport. Ce document comprend notamment une première région d'intérêt comprenant la chaîne de caractères « surname » en caractère d'imprimerie. Cette première région est de contenu prédéterminé en ce sens qu'on la retrouvera sur tous les autres passeports du même modèle. Ce document comprend par ailleurs une deuxième région d'intérêt personnalisé contient le nom de famille de la personne détentrice du passeport (ici « Donatien »).

Un document structuré dans un état parfait est généralement plan, sans pliure. Toutefois, le passeport représenté en figure 1 est dans un état déformé, plus précisément froissé.

### B. Dispositif d'analyse de document structuré

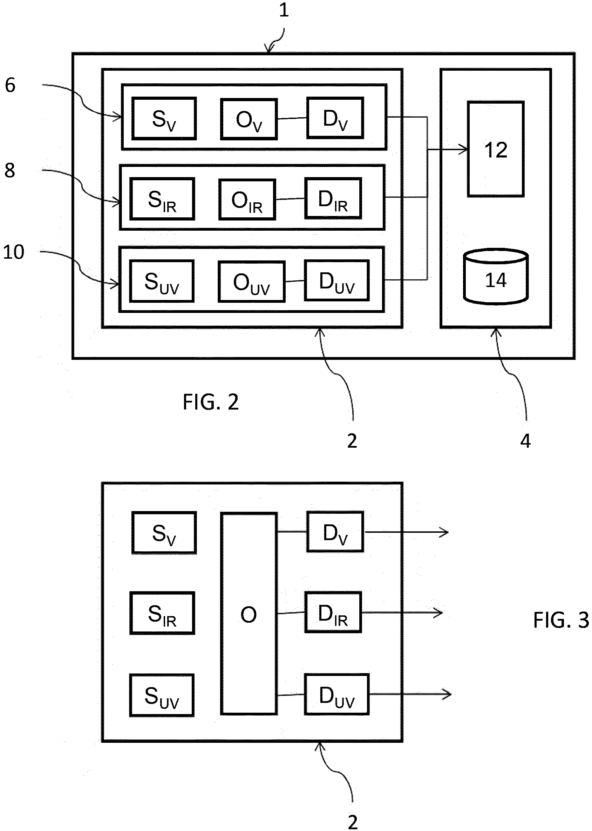

En référence à la **figure 2**, un dispositif 1 d'analyse de document structuré comprend un module d'acquisition d'image 2 du document structuré, et un module de traitement 4 des images acquises par le module d'acquisition 2.

Le module d'acquisition d'image 2 peut être configuré pour acquérir des images de types différents.

Le module d'acquisition d'image 2 est configuré pour produire au moins une image d'un premier type, porteuse d'informations sur le document à analyser lorsque le document est éclairé par une source lumineuse dans le domaine visible $S_V$. La source lumineuse dans le domaine visible $S_V$ est une source lumineuse générant un rayonnement lumineux ayant au moins une longueur d'onde comprise dans l'intervalle allant de 380 nanomètres à 780 nanomètres. Le module d'acquisition d'image 2 peut comprendre une telle source lumineuse dans le domaine visible $S_V$ de sorte à éclairer le document à analyser. En variante, le module d'acquisition d'image 2 ne comprend pas une telle source lumineuse dans le domaine visible, et le document est simplement soumis à un éclairage environnant. Le module d'acquisition d'image 2 comprend par ailleurs un capteur $D_V$ sensible à la longueur d'onde visible émise par la source dans le domaine visible $S_V$.

Par ailleurs, le module d'acquisition d'image 2 est configuré pour produire au moins une image d'un deuxième type, porteuse d'informations sur le document à analyser lorsque le document est éclairé par une source infrarouge (IR), c'est-à-dire une source lumineuse générant un rayonnement lumineux ayant au moins une longueur d'onde supérieure à 780 nanomètres, par exemple dans le domaine infrarouge proche (de 780 nm à 3 μm). Le module d'acquisition d'image 2 comprend alors une telle source infrarouge $S_{IR}$ et par ailleurs un capteur infrarouge $D_{IR}$ sensible à la longueur d'onde infrarouge émise par la source infrarouge $S_{IR}$.

Par ailleurs, le module d'acquisition d'image 2 est configuré pour produire au moins une image d'un troisième type, porteuse d'informations sur le document à analyser lorsque le document est éclairé par une source ultraviolette (UV), c'est-à-dire une source lumineuse générant un rayonnement lumineux dans le domaine ultraviolet (rayonnement ayant au moins une longueur d'onde inférieure à 380 nanomètres). Le module d'acquisition d'image 2 comprend alors une telle source UV, que l'on note $S_{UV}$.

Par abus de langage, les images selon le premier type, deuxième type et troisième type sont dans la suite appelées respectivement « images visibles », « images infrarouges » et « images UV ».

Dans le mode de réalisation illustré en figure 2, le module d'acquisition d'image 2 comprend trois unités de capture d'image comprenant chacune un objectif défini par un axe optique : une première unité 6 comprenant un premier objectif $O_V$ pour acquérir des images visibles, une deuxième unité 8 comprenant un deuxième objectif $O_{IR}$ pour acquérir des images infrarouges, et une troisième 10 unité comprenant un troisième objectif $O_{UV}$ pour acquérir des images UV. Les trois types d'image peuvent ainsi être produits en parallèle par les trois unités de capture d'image 6, 8, 10.

Dans un autre mode de réalisation illustré en **figure 3**, le module d'acquisition 2 comprend un unique objectif O qui est utilisé pour l'acquisition de plusieurs types d'images, par exemples les trois types d'images. Ce module d'acquisition d'image 2 est configurable dans un mode d'acquisition dans le domaine visible, dans un mode d'acquisition dans le domaine infrarouge et dans un mode d'acquisition dans le domaine ultraviolet.

Le module d'acquisition d'image 2 comprend typiquement un filtre infrarouge mobile entre une position active et une position inactive. Le filtre infrarouge est adapté pour conserver sélectivement au moins au moins une longueur d'onde infrarouge émise par la source infrarouge, et éliminer toute longueur d'onde dans le domaine visible.

Lorsque le module d'acquisition d'image 2 est configuré dans le mode d'acquisition visible, les images acquises par le module d'acquisition d'image 2 sont classées en tant qu'images visibles. La source lumineuse dans le domaine visible éventuellement intégrée au module d'acquisition d'image 2 est activée dans le mode d'acquisition visible.

Lorsque le module d'acquisition d'image 2 est configuré dans le mode d'acquisition infrarouge, la source infrarouge est activée, et le filtre infrarouge est positionné dans la position active. Le rayonnement infrarouge émis par la source est projeté vers le document à analyser.

Lorsque le document comprend certains matériaux sensibles à l'infrarouge (c'est le cas typiquement de certaines encres), le rayonnement infrarouge est réfléchi par la surface du document, puis est reçu par l'objectif du module d'acquisition d'image 2. Toutefois, l'appareil de vue capte simultanément un rayonnement visible si le document n'est pas plongé dans l'obscurité. Les rayonnements reçus passent à travers le filtre infrarouge ; seules les longueurs d'ondes infrarouges sont conservées dans le rayonnement obtenu en sortie du filtre. Une image infrarouge est alors produite sur la base du rayonnement filtré.

Lorsque le module d'acquisition d'image 2 est configuré dans le mode d'acquisition ultraviolet, la source UV est activée. Le filtre infrarouge est par ailleurs positionné dans la position inactive. Le rayonnement UV émis par la source UV est projeté vers le document à analyser.

Le document est susceptible de présenter certaines informations invisibles à l'oeil nu, mais qui deviennent visibles lorsque ces défauts sont éclairés par le rayonnement UV. Le rayonnement UV incident subit un décalage en longueur d'onde vers le domaine visible, si bien que le rayonnement réfléchi par le document comporte au moins une longueur d'onde dans le domaine visible porteuse d'informations sur ces défauts. Ce rayonnement réfléchi est reçu par l'appareil de prise de vue, et une image du troisième type est produite sur la base de ce rayonnement reçu. Comme le filtre infrarouge est dans sa position inactive, le rayonnement reçu n'est pas filtré par le filtre infrarouge. De telles informations invisibles à l'oeil nu sont par exemple utilisées pour rendre plus difficile la copie de documents structurés à caractère officiel, tels qu'une carte d'identité ou un passeport.

En définitive, le module d'acquisition d'image 2 est configuré pour produire au moins un type d'image parmi les trois types d'images précités. Il sera vu dans la suite que ces différentes images, porteuses d'informations différentes mais complémentaires, peuvent être avantageusement combinées pour améliorer la précision de l'analyse du document structuré.

De retour à la figure 2, le module de traitement d'image 4 comprend au moins un processeur 12 configuré pour mettre en oeuvre des algorithmes de traitements d'images qui seront détaillés ci-après.

Le module de traitement d'image 4 comprend par ailleurs au moins une mémoire 14 pour mémoriser des données, notamment des images reçues du module d'acquisition ou des images résultants des traitements d'images mis en oeuvre par le processeur.

La mémoire 14 mémorise notamment au moins une image de référence montrant un modèle de document structuré dans un état non déformé.

Le modèle de document montré dans une image de référence comprend plusieurs régions d'intérêt de contenu prédéterminé.

Sont également mémorisées dans la mémoire, pour chaque région d'intérêt de contenu prédéterminé, des points d'intérêts associés à la région. Chaque point d'intérêt est par exemple défini par un couple de coordonnées permettant de le localiser dans l'image de référence.

En revanche, ne sont pas identifiés dans l'image de référence des points d'intérêts se rapportant à des régions d'intérêt personnalisées, pour la simple raison que le modèle montré dans cette image de référence ne comprend pas de telles régions d'intérêt personnalisées.

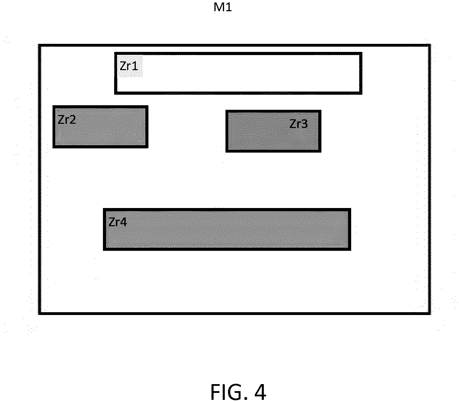

A titre d'exemple, la **figure 4** illustre une image de référence M1 ayant quatre régions d'intérêt de contenu prédéterminé Zr1, Zr2, Zr3, Zr4, de formes rectangulaires. Par exemple, sont mémorisés pour chacune de ces trois régions d'intérêt quatre points d'intérêts, correspondant aux quatre coins de ces régions, étant entendu que d'autres points d'intérêt situés à l'intérieur de ces régions sont utilisables.

L'image de référence M1 est par exemple une image visible ayant été acquise préalablement par le module d'acquisition d'image 2, ou par un dispositif équivalent.

Comme on le verra dans la suite, d'autres images de référence peuvent être également mémorisées dans la mémoire, chaque image de référence est associée à un type d'image susceptible d'être acquise par le module d'acquisition d'image 2. La mémoire peut ainsi mémoriser au moins une image visible (dont l'image M1) et/ou au moins une image de référence infrarouge et/ou au moins une image de référence UV.

**C. Procédé d'analyse de contenu d'un document structuré**

Vont être décrits dans ce qui suit plusieurs modes de réalisation de procédé d'analyse de document tel que celui représenté sur la figure 1, au moyen du dispositif selon l'une des figures 2 ou 3.

**C.1. Premier mode de réalisation de procédé utilisant une image de référence et deux images acquises**

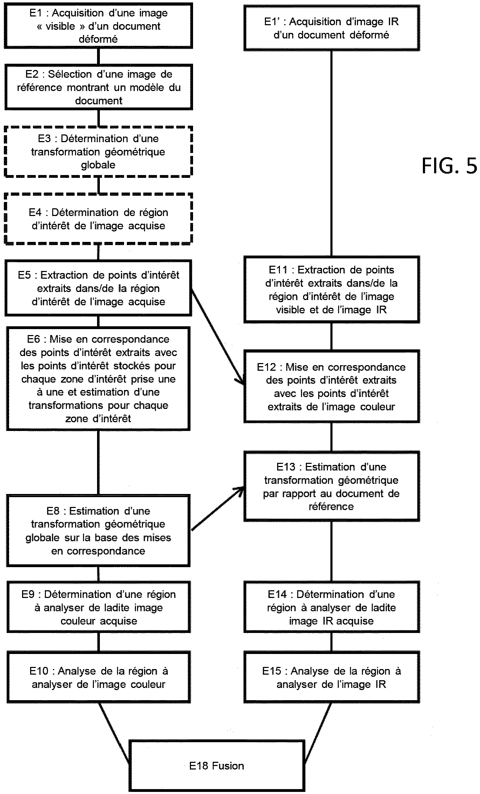

Les étapes d'un procédé d'analyse selon un premier mode de réalisation sont illustrées sur l'organigramme de la **figure 5.**

Le module d'acquisition d'image 2 acquiert une première image A1 visible.

La première image acquise A1 est mémorisée dans la mémoire 14 du module de traitement d'image 4.

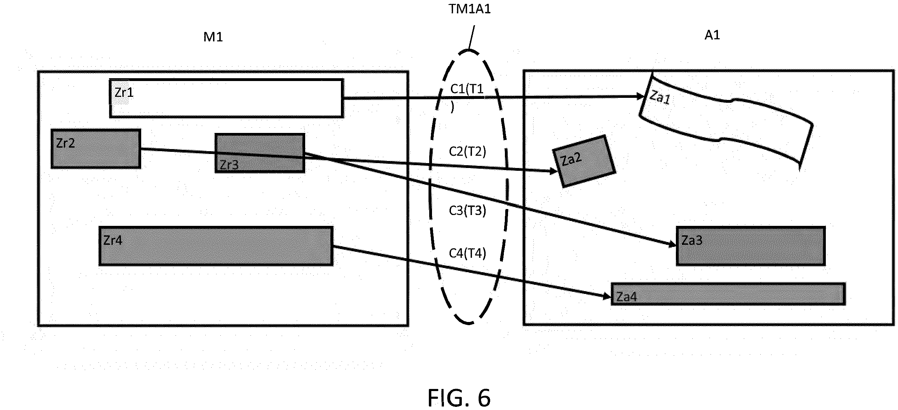

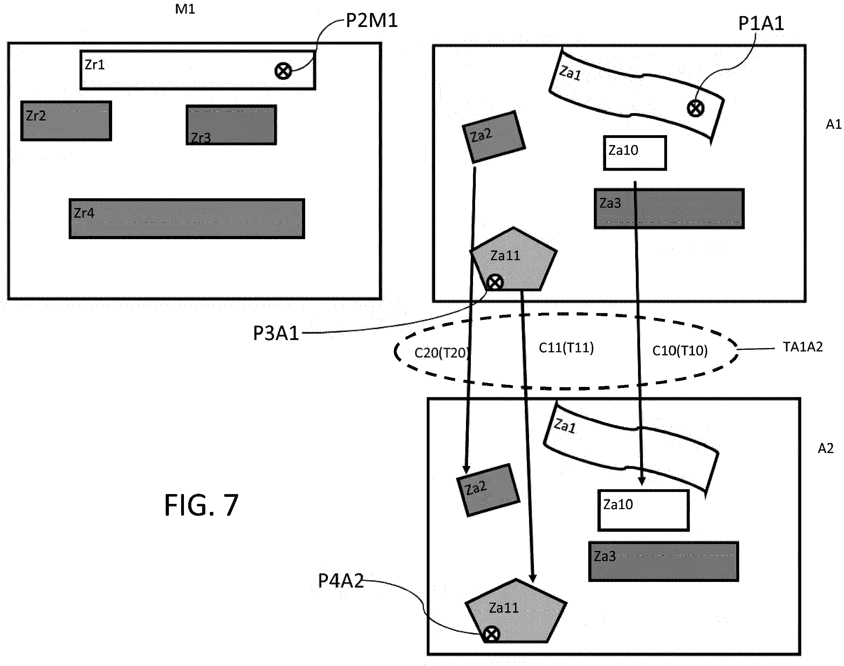

En référence aux **figures 6 et 7**, la première image acquise A1 montre le document et plus précisément des régions d'intérêt Za1, Za2, Za3, Za4, Za10, Za11. Certaines de ces régions (les régions Za1, Za2, Za3, Za4) ont un contenu prédéterminé similaire à des régions d'intérêts Zr1, Zr2, Zr3, Zr4 de l'image de référence M1.

Comme on peut le voir sur la figure 6, les déformations du document à analyser sont telles que les régions d'intérêt de contenu prédéterminée Za1 à Za4 n'apparaissent pas exactement sous la même forme, orientation et/ou position dans l'image A1 que les régions d'intérêts correspondantes Zr1 à Zr4 dans l'image de référence M1.

Lorsque plusieurs images de référence associées au type d'image « visible » sont mémorisées dans la mémoire, l'une d'entre elles est sélectionnée (étape E2). On suppose dans ce qui suit que l'image M1 est sélectionnée comme image visible de référence.

Le module de traitement d'image 4 détermine dans l'image acquise au moins une région d'intérêt (étape E4).

Le module de traitement d'image 4 extrait des points d'intérêts dans l'image acquise A1, selon une méthode connue de l'état de la technique (étape E5).

Le module de traitement d'image 4 met en correspondance des points d'intérêt de la région d'intérêt Zr1 de l'image M1, mémorisés dans la mémoire, avec des points d'intérêt extraits dans l'image A1 (étape E6), selon une méthode connue de l'état de la technique. A titre d'exemple, le point P1A1 situé dans la zone Za1 est mis en correspondance avec le point P2M1 situé dans la zone Zr1.

On note par convention Ci l'ensemble des mises en correspondances réalisées pour la région Zri. Cet ensemble C1 est représentatif de déformations locales à la région Zr1, subies par le document à analyser par rapport au modèle montré dans l'image de référence M1.

De façon optionnelle, le module de traitement d'image 4 estime en outre une transformation géométrique locale propre à la région d'intérêt Zr1, à partir des mises en correspondance C1. On note par convention Ti la transformation géométrique réalisée pour la région Zri. La transformation Ti est calculée par exemple à partir :

- d'un modèle affine déterminant une application affine reliant les points d'intérêt de la région Zai de l'image A1 acquise et des points d'intérêt de la région Zri de l'image de référence M1, telle qu'une translation, une rotation ou une homothétie ou une mise à l'échelle, ou une combinaison de ces transformations. Un tel modèle permet de préserver les alignements de points et les ratios de distances entre des points du document,

- d'un modèle homographique déterminant une application homographique reliant les points d'intérêt de l'image A1 acquise et les points d'intérêt de l'image de référence M1. Un tel modèle permet de faire correspondre un plan d'une surface plane vu par une caméra avec le plan de la même surface dans une autre image,

- d'un modèle d'interpolation déterminé à l'aide d'un algorithme de pondération par distance inverse, tel que proposé dans le document « Franke R., 1982, Scattered data interpolation : tests of some methods, mathematical of computation, 38(157), 181-200 », et/ou d'interpolation par splines.

Une transformation Ti fournit des informations de déformation plus complètes qu'un ensemble Ci de mises en correspondances de points d'intérêt seul.

Les étapes E4, E5, E6 qui précèdent sont répétées pour chaque région d'intérêt Zri du modèle montré dans l'image de référence M1. Sont ainsi obtenues également les mises en correspondances C2, C3, C4 et les transformations associées T2, T3, T4, comme cela est représenté sur la figure 6.

Dans le cas de déformations complexes (tels que le froissage représenté en figure 1), les transformations T1 à T4 sont bien entendu différentes les unes par rapport aux autres.

A partir des correspondances C1-C4, et le cas échéant à partir des transformations correspondantes T1-T4, le module de traitement d'image 4 estime une transformation géométrique globale TM1A1 tenant compte de déformations du document structuré montré dans la première image acquise par rapport au premier modèle, selon une méthode connue de l'état de la technique (étape E8). La transformation TM1A1 est globale en ce sens qu'elle couvre le modèle complet montré dans l'image de référence et le document montré dans l'image acquise A1.

A titre d'exemple, la transformation TM1A1 peut être déterminée à l'aide d'un algorithme de pondération par distance inverse ou d'interpolation par splines.

La transformation globale TM1A1 peut être vue comme une fonction continue par morceaux sur un domaine de définition de dimension 2 correspondant au moins à l'ensemble du modèle montré dans l'image de référence A1 vers un domaine image également de dimension 2 correspondant au moins à l'ensemble du document structuré montré dans l'image acquise A1. Le domaine de définition est l'ensemble des pixels de l'image de référence M1. L'image de chaque pixel de l'image M1 par cette transformation TM1A1 est un pixel de l'image acquise A1.

Le calcul appliqué par cette transformation globale TM1A1 est différent selon l'emplacement du pixel de l'image de référence considéré. Par exemple, la transformation globale utilise la transformation locale Ti pour transformer un pixel se trouvant dans la région d'intérêt Zri. En revanche, un pixel se trouvant hors de toute zone d'intérêt Zri montrée dans l'image de référence est transformé par la transformation TM1A1 par exemple au moyen de la transformation locale Ti de la région Zri la plus proche de ce pixel.

La transformation géométrique TM1A1 caractérise des déformations telles que des froissages, qui sont des déformations bien plus complexes que des déformations simples dues à la perspective induite par un mauvais positionnement du document traité, par exemple dans un plan incliné par rapport au plan de prise d'image, comme cela est le cas du procédé décrit dans le document WO2011/058418.

On verra dans la suite que d'autres transformations géométriques globales sont estimées sur la base de paires d'images différentes montrant le document structuré ou un modèle associé à ce dernier. Par convention, on nomme « TXiYj » une transformation géométrique globale tenant compte de déformations d'un document montré dans l'image « Yj » par rapport à un document montré dans l'image « Xi ».

Le module de traitement d'image 4 détermine ensuite au moins une région à analyser dans la première image acquise A1, par projection d'au moins une région de référence de l'image de référence M1 au moyen de la première transformation TM1A1 (étape E9).

Une région de référence est par exemple une des régions d'intérêts de l'image de référence M1.

Le module de traitement d'image 4 analyse ensuite le contenu de la région déterminée au cours de l'étape E9 selon une méthode connue (étape E10) : reconnaissance de caractère (OCR), etc.

On constate que les régions d'intérêts personnalisées Za10 et Za11 montrées dans l'image acquise A1 n'ont pas été mises à profit jusqu'ici.

Pour mettre à profit ces régions d'intérêt personnalisées, une deuxième image A2 montrant le même document structuré est acquise par le module d'acquisition d'image 2 (étape E1').

La deuxième image A2 peut être une image du même type que la première image (donc une image acquise avec les mêmes conditions d'éclairage que lors de l'acquisition de l'image A1), mais dans ce cas montrant le document sous un angle de vue différent. Cet angle de vue différent peut être obtenu par déplacement d'un objectif du module d'acquisition entre les acquisitions des images A1 et A2 (ce déplacement étant naturel lorsque le module d'acquisition est embarqué dans un terminal mobile portatif).

Alternativement, la deuxième image A2 peut être d'un type différent de celui de la première image acquise A1 (infrarouge ou UV). Dans ce cas, la deuxième image peut montrer le document sous un angle de vue identique ou différent de l'image A1.

Dans ce qui suit, on prend l'hypothèse que l'image A2 est une image infrarouge.

La deuxième image acquise A1 est mémorisée dans la mémoire 14 du module de traitement d'image 4.

Le module de traitement d'image 4 extrait des points d'intérêts dans la deuxième image acquise A2 (étape E11), selon la même méthode que celle utilisée au cours de l'étape E5.

Il est possible que des points d'intérêts contenus dans les régions d'intérêt Za10 ou Za11 dans la première image acquise ont été extraits au cours de l'étape E5. Toutefois, ces points d'intérêts n'ont pas été mis en correspondance avec des points d'intérêts de l'image de référence M1, car ces régions ont un contenu personnalisé.

Le module de traitement d'image 4 met en correspondance des points d'intérêts extraits dans la deuxième image acquise A2 avec ces points d'intérêt extraits dans la première image acquise A1 restant inutilisés au cours de l'étape E11. En d'autres termes, il est possible qu'au moins un des points d'intérêts issus de l'image A1 utilisé ici soit différent de chacun des points d'intérêt issus de la même image A1 mis en correspondance avec un point de l'image de référence M1.

Dans l'exemple illustré en figure 7, le point P3A1 situé dans la zone Za11 montrée dans l'image A1 est mis en correspondance avec le point P4A2 situé dans la zone Za11 montrée dans l'image A2. Par ailleurs, sont obtenus des ensembles de mise en correspondance C10, C11 correspondant respectivement aux régions Za10, Za11, entre les images A1 et A2. Ces deux ensembles se fondent sur des points qui n'ont pas été extraits lors de l'étape E5. En outre, est obtenu l'ensemble de mise en correspondance C20 pour la zone Za2. Pour constituer cet ensemble, des points extraits au cours de l'étape E6 peuvent avoir été réutilisés.

De la même manière qu'au cours de l'étape E6, le module de traitement d'image 4 estime, à partir des correspondances effectuées dans l'étape précédente E11, une transformation géométrique TA1A2 tenant compte de déformations du document montré dans la deuxième image acquise A2 par rapport au document montré dans la première image acquise A1.

Ceci permet de caractériser les déformations subies par des régions d'intérêt du document structuré à contenu personnalisé, ce qui ne pouvait être effectué au moyen de l'image de référence M1, qui ne recense que des régions d'intérêt de contenu prédéterminé.

Sont notamment prises en compte pour estimer cette transformation géométrique TA1A2 les données suivantes :

- les ensembles C10, C11, C20
- optionnellement des transformations géométriques locales T10, T11, T20 correspondantes, calculées conformément à la méthode décrite précédemment, représentées sur la figure 7.

Le module de traitement d'image 4 estime ensuite une transformation géométrique tenant compte de déformations du document montré dans l'une des deux images acquises A1 ou A2, dite image cible, par rapport au premier modèle, la transformation dépendant de la deuxième transformation TA1A2 (étape E13).

L'image A2 est utilisée comme image cible au cours de l'étape E13. La transformation estimée au cours de l'étape E13 est la composition TM1A2 des transformations géométrique TM1A1 et TA1A2:

$$TM1A2 = TM1A1 \circ TA1A2$$

Le module de traitement d'image 4 détermine ensuite au moins une région à analyser dans l'image cible A2 par projection de la même région de référence que celle déterminée au cours de l'étape E9, au moyen de la transformation géométrique TM1A2 estimée au cours de l'étape E13.

Le module de traitement d'image 4 analyse ensuite le contenu de la région déterminée dans l'image A2 (étape E15), par exemple de la même manière qu'au cours de l'étape E10.

Les analyses des images acquises A1, A2 (étapes E10, E15) peuvent comprendre les mêmes traitements, par exemple une reconnaissance de caractères (OCR), ou de motifs prédéterminées, connus en eux-mêmes.

Les résultats des analyses des différentes images acquises A1, A2 sont ensuite combinés dans une étape de fusion (étape E18).

Par exemple, la fusion E18 comprend une authentification du document structuré dont le résultat dépend des analyses des images acquises A1, A2. Typiquement, lorsque la ou une région de référence est une région contenant un motif de sécurité sélectivement révélé par éclairage infrarouge du document structuré, l'authentification réussit à condition que ce motif de sécurité soit détecté dans l'image infrarouge A2 au cours de l'analyse E15, mais non détecté dans l'image visible A1 au cours de l'analyse E10 : le document structuré est alors considéré comme authentique. Sinon, l'authentification échoue : le document structuré est alors considéré comme inauthentique.

Alternativement ou de façon complémentaire, la fusion comprend un arbitrage entre des caractères détectés au cours des analyses E10, E15. Ceci peut être mis en oeuvre lorsque le document structuré comprend une chaîne de caractères visible dans chacune des images acquises A1, A2. Supposons par exemple que le module de traitement d'image 4 détecte dans l'image A1 la chaîne de caractères ABRUCADABRA, et dans l'image A2 la chaîne de caractères ABRACADABRU, alors que la chaîne de caractères qui figurait réellement dans le document montré dans ces images est ABRACADABRA. Est produit pour chaque caractère un indice de confiance de détection. Par exemple, est associé au « A » final » détecté dans l'image A1 un indice de confiance de valeur supérieure à l'indice de confiance associé au « U » final détecté dans l'image A2 ; le « A » est donc retenu. Similairement, est associé au « U » en quatrième position de la chaine de caractère détectée dans l'image A1 un indice de confiance inférieure à l'indice de confiance associé au caractère « A » de même position détectée dans l'image A2 : ce A en quatrième position de la chaîne de caractères issue de A2 est retenu. Ici, l'étape de fusion E18 a pour effet de consolider de manière synergique les résultats des deux analyses.

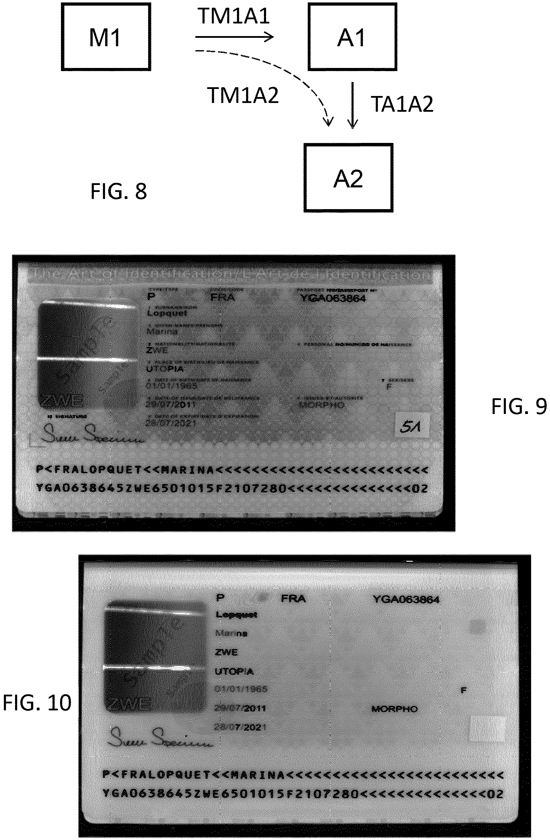

Dans le mode de réalisation de procédé présenté ci-dessus, une seule image de référence M1 a été avantageusement utilisée pour déterminer une même région de référence à analyser dans les images acquises A1, A2. A cet égard, il est à noter que l'estimation de la transformation TA1A2 entre les images acquises A1 et A2 est relativement simple à mettre en oeuvre, et qu'il n'y a pas de mise en correspondance directe de points d'intérêts entre les images M1 et A2, comme l'illustre schématiquement la **figure 8.** En effet, la transformation TA1A2 peut être une homographie dont une approximation peut être prédéterminée et être fonction de la façon dont le module d'acquisition d'image 2 est conçu. Dès lors, le temps de traitement cumulé pour estimer les transformations TM1A1 et TM1A2 est réduit.

A titre d'exemple, on a illustré en **figure 9** un exemple d'image de référence M1 montrant un document structuré de type passeport. La **figure 10** montre un exemple d'image acquise A2 dans le domaine infrarouge.

Il convient de noter que des champs non personnalisés n'apparaissent pas dans l'image acquise A2. De la sorte, la transformation TM1A2 ne peut pas être estimée directement sur la base de l'image A2 d'une manière satisfaisante.

### C.2. Deuxième mode de réalisation de procédé utilisant une image de référence et trois images acquises

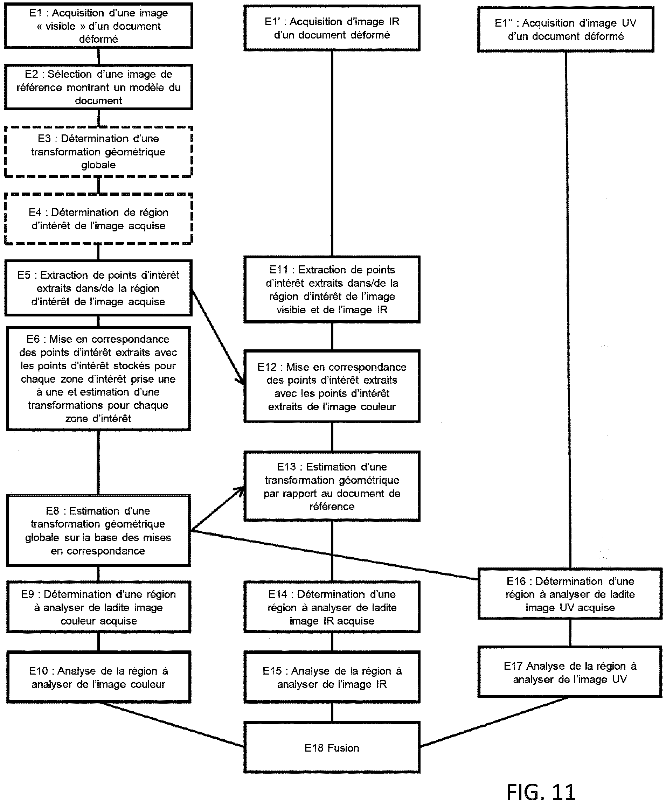

Les étapes d'un deuxième mode de réalisation de procédé sont représentées sur l'organigramme de la **figure 11.**

Dans ce deuxième mode de réalisation, au moins une troisième image A3 peut également être acquise par le module d'acquisition d'image 2 (étape E1"). La troisième image A3 est par exemple une image de type UV, constituant une source d'information complémentaire sur les déformations du document à analyser.

Dans ce deuxième mode de réalisation, les images A1 et A3 ont été acquises au moyen d'un même objectif à des instants proches ; il est supposé que les deux images A1 et A3 montrent le document structuré sous le même angle de vue. Dès lors, le module de traitement d'image 4 détermine ensuite au moins une région à analyser dans l'image A3 par projection de la même région de référence que celle utilisée au cours des étapes E9 et E14, au moyen de la transformation géométrique TM1A1 estimée (étape E16).

En variante, si les images A1 et A3 ne montrent pas le document structuré sous le même angle de vue, les étapes de traitement mises en oeuvre par le module de traitement d'image 4 sur la base de l'image A2 peuvent être répétées pour la troisième image A3, de sorte à obtenir une transformation géométrique TM1A3 résultant de la composition de la transformation TM1A1 déjà discutée et d'une transformation TA1A3 entre les images acquises A1 et A3. Le module de traitement d'image 4 peut alors ensuite déterminer au moins une région à analyser dans l'image A3 par projection de la même région de référence que celle utilisée au cours des étapes E9 et E14, au moyen de la transformation géométrique TM1A3 estimée.

Le module de traitement d'image 4 analyse ensuite le contenu de la région déterminée (étape E17), par exemple de la même manière qu'au cours de l'étape E10 ou E15.

L'étape de fusion 18 est alors réalisée non pas sur la base de deux images, mais des trois images A1, A2 et A3, selon les modalités précédemment décrites.

Comme dans le premier mode de réalisation, le procédé selon le deuxième mode de réalisation utilise une seule image de référence M1 pour déterminer une même région de référence à analyser dans les images acquises A1, A2. De plus, l'image UV constitue une source d'information complémentaire permettant d'améliorer le traitement de fusion réalisé au cours de l'étape 18.

### C.3. Troisième de réalisation de procédé utilisant deux images de référence et deux images acquises

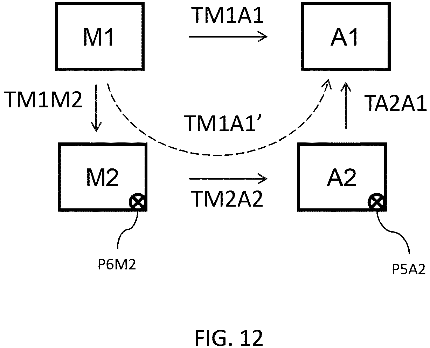

Dans un troisième mode de réalisation dont le principe général est schématiquement illustré en **figure 12**, il est utilisé une autre image de référence M2, en sus de l'image de référence M1. Par ailleurs, l'image A1 est utilisée comme image cible.

La deuxième image de référence M2 est du même type que la deuxième image acquise A2 (de type infrarouge dans les exemples qui précèdent). La deuxième image de référence M2 est par exemple acquise au cours d'une étape préliminaire à l'aide du module d'acquisition, dans les mêmes conditions d'éclairage que celles utilisées pour l'acquisition de l'image A2.

Similairement à la première image de référence M1, la deuxième image de référence M2 montre un modèle du document structuré présentant des régions d'intérêt de contenu prédéterminé. Toutefois, ces régions d'intérêts ne sont pas forcément les mêmes que celles montrées dans l'image de référence M1. Le modèle montré dans l'image M2 se rapporte donc au même document structuré, mais peut être différent du modèle montré dans l'image M1 en termes de contenu.

La deuxième image de référence M2 comprend au moins une région d'intérêt de contenu prédéterminé non présente dans l'image M1. Cette région a par exemple un contenu uniquement révélé par infrarouge, tel qu'un motif de sécurité. A titre d'exemple, des informations peuvent avoir été imprimées ou écrites sur le document à analyser au moyen d'une encre visible mais optiquement variable, et d'autres informations au moyen d'une encre infrarouge non visible à l'oeil nu mais révélée dans une image infrarouge, une telle encre étant traditionnellement optiquement plus stable que l'encre visible.

En outre, des régions d'intérêt peuvent apparaître dans l'image A1 dans le domaine visible, mais pas dans l'image A2 infrarouge.

Les modèles montrés dans les images de référence M1 et M2 peuvent être montrés sous des angles de vue différents. Dans ce cas, on suppose qu'il a été préalablement mémorisé dans la mémoire une transformation géométrique TM1M2 prédéterminée tenant compte de déformations du modèle montré dans l'image M2 par rapport au modèle montré dans l'image M1. Par exemple, lorsque les deux modèles montrés dans les images M1 et M2 ne sont pas déformés, cette transformation TM1M2 est simplement représentative d'un changement d'angle de vue entre les images M1 et M2.

Le module de traitement d'image 4 estime une transformation géométrique $TM1A1'$ tenant compte de déformations du document montré dans l'image acquises A1, par rapport au premier modèle M1, la transformation dépendant de la deuxième transformation TA1A2.

Plus précisément, la transformation $TM1A1'$ est obtenue par composition de l'inverse de la transformation TA1A2 (inverse que l'on note TA2A1), de la transformation TM2A2, et de la transformation TM1M2 prédéterminée.

$$TM1A1' = TM1M2 \circ TM2A2 \circ TA2A1$$

La transformation TM2A2 est estimée à partir de mises en correspondance de points d'intérêts de l'image M2 (tel que le point P6M2 représenté en figure 12) avec des points d'intérêt extraits dans l'image acquise A2 (tel que le point P5A2 représenté en figure 12), de la même manière que pour la transformation $TM1A1$. Les points P6A2 et les points P4A2 (sollicités pour obtenir la transformation TA1A2) peuvent être identiques ou différents.

Tout comme la transformation TM1A1, la transformation TM1A1' ainsi estimée tient compte de déformations du document structuré montré dans la première image acquise A1 par rapport au modèle montré dans la première image de référence M1. Toutefois, comme l'illustre schématiquement la figure 12, cette transformation TM1A1' donne des informations de déformations complémentaires à celles données par la transformation TM1A1, et ce en raison du fait que les correspondances de points d'intérêt entre les images A1 et A2 ne sont pas les mêmes que les correspondances de points d'intérêt entre les images M1 et A1. Autrement dit, dans ce mode de réalisation, les images M2 et A2 ont été mises à profit pour caractériser de manière plus précise les déformations du document structuré tel que montré dans l'image A1 par rapport au modèle montré dans l'image de référence A1.

### C.4. Autres mode de réalisation de procédé utilisant plusieurs images de référence et plusieurs images acquises

Les caractéristiques décrites dans les parties C.2 et C.3 peuvent être combinées au sein du procédé : notamment, il peut être envisagé que les mises en correspondances faites entre les images A1 et A2 servent non seulement pour mettre en oeuvre l'analyse de l'image A2 au cours de l'étape E15, et ce au moyen de la transformation TM1A2 (voir partie C.2), mais également à améliorer l'analyse de l'image A1 réalisée au cours de l'étape E10, par le calcul de la transformation TM1A1' (voir partie C.3). Dans les deux cas, l'image considérée comme image cible est différente. En définitive, les informations de déformation additionnelles obtenues à partir de l'image A2 peuvent non seulement servir au cours de l'étape E14 à localiser avec précision une région d'intérêt dans l'image A2, mais également servir à améliorer la qualité de l'analyse E10 réalisée sur l'image visible A1.

Par ailleurs, le principe décrit en partie C.3 peut être généralisé pour toute image acquise Ai autre que l'image A1, sous l'hypothèse qu'une image de référence Mi autre que l'image de référence M1 est mémorisée dans la mémoire 14. Il peut alors être obtenu une transformation $TM1A1^{(i)}$ tenant compte de déformations du document structuré montré dans l'image acquise A1 par rapport au modèle montré dans l'image de référence M1, obtenue de la manière suivante :

$$TM1A1^{(i)} = TM1Mi \circ TMiAi \circ TAiA1$$

Dès lors, chaque transformation additionnelle $TM1A1^{(i)}$ peut être utilisée en sus de la transformation TM1A1 au cours de l'étape E9 de détermination d'une ou plusieurs régions de l'image A1 en vue de l'analyse de leur contenu au cours de l'étape E10.

Ce principe peut également être généralisée à toute image acquise Aj considéré comme image cible. Le module de traitement d'image 4 peut ainsi déterminer au moins une région à analyser dans l'image cible Aj par projection d'une région de référence de l'image de référence Mj au moyen d'une transformation géométrique TMjAj, mais également au moyen d'au moins une autre transformation géométrique obtenue de la manière suivante :

$$TMjAj^{(i)} = TMjMi \circ TMiAi \circ TAiAj$$

où i et j sont différents.

## Revendications

**1.** Procédé d'analyse de contenu d'un document structuré susceptible d'être déformé, mis en oeuvre à partir d'une première image (A1) acquise (E1) et d'une deuxième image (A2) acquise (E1') montrant chacune le document, et comprenant des étapes de :

• mise en correspondance (E6) de premiers points d'intérêt (P1A1) extraits dans la première image acquise (A1) avec des deuxièmes points d'intérêt (P2M1) d'une première image de référence (M1) montrant un premier modèle du document,
• estimation (E8) d'une première transformation géométrique (TM1A1) tenant compte de déformations du document structuré montré dans la première image acquise (A1) par rapport au premier modèle, à partir des correspondances effectuées dans l'étape précédente,
• détermination (E9) d'au moins une première région à analyser dans la première image acquise (A1), par projection d'au moins une région de référence de la première image de référence au moyen de la première transformation (TM1A1),
• analyse (E10) du contenu de la première région déterminée,

le procédé étant **caractérisé en ce qu'**il comprend en outre des étapes de :

• mise en correspondance (E12) de troisièmes points d'intérêts (P3A2) extraits dans la deuxième image acquise (A2) avec des quatrièmes points d'intérêt (P4A1) extraits dans la première image acquise (A1),
• estimation (E13), à partir des correspondances effectuées dans l'étape précédente (E12), d'une deuxième transformation géométrique (TA1A2) tenant compte de déformations du document montré dans la deuxième image acquise (A2) par rapport au document montré dans la première image acquise (A1),
• estimation d'une troisième transformation géométrique (TM1A2) tenant compte de déformations du document montré dans la deuxième images acquise (A2) par rapport au premier modèle montré dans la première image de référence (M1), dans lequel la troisième transformation est une composition de la première transformation géométrique (TM1A1) et de la deuxième transformation géométrique (TA1A2),
• détermination (E14) d'au moins une deuxième région à analyser dans la deuxième image acquise (A2) par projection de la région de référence de la première image de référence au moyen de la troisième transformation géométrique,
• analyse (E15) du contenu de la deuxième région déterminée.

**2.** Procédé d'analyse de contenu d'un document structuré susceptible d'être déformé, mis en oeuvre à partir d'une première image (A1) acquise (E1) et d'une deuxième image (A2) acquise (E1') montrant chacune le document, et comprenant des étapes de :

• mise en correspondance (E6) de premiers points d'intérêt (P1A1) extraits dans la première image acquise (A1) avec des deuxièmes points d'intérêt (P2M1) d'une première image de référence (M1) montrant un premier modèle du document,
• estimation (E8) d'une première transformation géométrique (TM1A1) tenant compte de déformations du document structuré montré dans la première image acquise (A1) par rapport au premier modèle, à partir des correspondances effectuées dans l'étape précédente,
• détermination (E9) d'au moins une première région à analyser dans la première image acquise (A1), par projection d'au moins une région de référence de la première image de référence au moyen de la première transformation (TM1A1),
• analyse (E10) du contenu de la première région déterminée,

le procédé étant **caractérisé en ce qu'**il comprend en outre des étapes de :

• mise en correspondance (E12) de troisièmes points d'intérêts (P3A2) extraits dans la deuxième image acquise (A2) avec des quatrièmes points d'intérêt (P4A1) extraits dans la première image acquise (A1),
• estimation (E13), à partir des correspondances effectuées dans l'étape précédente (E12), d'une deuxième transformation géométrique (TA1A2) tenant compte de déformations du document montré dans la deuxième image acquise (A2) par rapport au document montré dans la première image acquise (A1),
• mise en correspondance de cinquièmes points d'intérêts (P5A2) extraits dans la deuxième image acquise (A2) avec des sixièmes points d'intérêt (P6M2) d'une deuxième image de référence (M2) montrant un deuxième modèle du document,
• estimation, à partir des correspondances effectuées dans l'étape précédente, d'une troisième transformation géométrique (TM2A2) tenant compte de déformations du document montré dans la deuxième image acquise (A2) par rapport au deuxième modèle,

- estimation d'une quatrième transformation géométrique (TM1A1') tenant compte de déformations du document montré dans la première image acquise (A1) par rapport au premier modèle montré dans la première image de référence (M1), dans lequel la quatrième transformation est une composition de l'inverse (TA2A1) de la deuxième transformation (TA1A2), de la troisième transformation (TM2A2), et d'une cinquième transformation géométrique (TM1M2) prédéterminée tenant compte de déformations du deuxième modèle par rapport au premier modèle,

- détermination (E9) d'au moins une deuxième région à analyser dans la première image acquise (A1) par projection de la région de référence de la première image de référence au moyen de la quatrième transformation géométrique (TM1A1'),

- analyse (E10) du contenu de la deuxième région déterminée.

3. Procédé selon la revendication précédente, comprenant en outre une étape de

- pour une pluralité de région d'intérêt de la deuxième image de référence, estimation d'une transformation géométrique locale propre à la région d'intérêt, à partir des sixièmes points d'intérêts (P6M2) localisés dans la région d'intérêt et des cinquièmes points d'intérêts (P5A2) avec lesquels ces sixièmes points d'intérêts (P6M2) ont été mis en correspondance,

dans lequel la troisième transformation (TM2A2) est estimée également à partir des transformations géométrique locales propres aux régions d'intérêt de la deuxième image de référence (M2).

4. Procédé selon l'une des revendications précédentes, dans lequel :

- la première image (A1) est acquise (E1) pendant que le document est éclairé par un rayonnement lumineux dans une première bande de longueurs d'ondes,

- la deuxième image (A2) est acquise (E1') pendant que le document est éclairé par un rayonnement lumineux dans une deuxième bande de longueurs d'ondes,

- la deuxième bande de longueurs d'onde est différente de la première bande de longueurs d'onde ou bien la deuxième image est acquise après la première image.

5. Procédé selon la revendication précédente, dans lequel

- la première bande de longueurs d'ondes est dans le domaine visible, et
- la deuxième bande de longueurs d'ondes est dans le domaine infrarouge, par exemple le domaine infrarouge proche, ou dans le domaine ultraviolet.

6. Procédé selon la revendication précédente, mis en oeuvre également à partir d'une troisième image (A3) acquise (E1") pendant que le document est éclairé par un rayonnement lumineux dans une troisième bande de longueurs d'ondes différente de la deuxième bande de longueurs d'onde, et dans lequel :

- la deuxième bande de longueurs d'ondes est dans le domaine infrarouge,
- la troisième bande de longueurs d'ondes est dans le domaine ultraviolet,

le procédé comprend en outre des étapes de :

- détermination (E16) d'au moins une troisième région à analyser dans la troisième image (A3),
- analyse (E17) du contenu de la troisième région déterminée.

7. Procédé selon l'une des revendications précédentes, dans lequel les images acquises (A1, A2, A3) montrent le document selon des angles de vue différents.

8. Procédé selon la revendication précédente, dans lequel les images acquises (A1, A2, A3) sont acquises (E1, E1', E1") successivement au moyen d'un même objectif, ou bien sont acquises par des objectifs distincts.

9. Procédé selon l'une des revendications précédentes, comprenant en outre

- pour une pluralité de régions d'intérêt prédéterminées de la première image de référence (M1), estimation d'une transformation géométrique locale propre à la région d'intérêt, à partir des deuxièmes points d'intérêts (P2M1) localisés dans la région d'intérêt et des premiers points d'intérêts (P1A1) avec lesquels ces deuxièmes points d'intérêts (P2M1) ont été mis en correspondance, dans lequel la première transformation géométrique (TM1A1) est estimée (E8) également à partir des transformations géométrique locales propres aux régions d'intérêt de la première image de référence, et/ou

- pour une pluralité de régions d'intérêt personnalisées de la première image acquise (A1), estimation d'une transformation géométrique locale propre à la région d'intérêt personnalisée, à partir de quatrièmes points d'intérêt (P4A1) localisés dans la région d'intérêt personnalisée et des troisièmes points d'intérêts (P3A2) avec lesquels ces quatrième points d'intérêts (P4A1) ont été mis en correspondance, dans lequel la deuxième transformation géométrique (TA1A2) est estimée (E13) également à partir des transformations géométrique locales propres aux régions d'intérêt personnalisées de la première image acquise (A1).

10. Procédé selon l'une des revendications précédentes, comprenant en outre une fusion (E18) des résultats fournis de chaque étape d'analyse.

11. Procédé selon la revendication précédente, dans lequel la fusion (E18) comprend une authentification du document, dans lequel l'authentification réussit à condition qu'une information soit trouvée au cours de l'analyse d'au moins une des images acquises (A1, A2, A3), et non trouvée au cours de l'analyse d'au moins une autre des images acquises (A1, A2, A3).

12. Procédé selon la revendication précédente, dans lequel chaque analyse (E10, E15, E17) comprend une reconnaissance de caractères, et dans lequel la fusion (E18) comprend un arbitrage entre les caractères reconnus au cours des étapes d'analyse.

13. Produit programme d'ordinateur comprenant des instructions de code pour l'exécution d'un procédé d'analyse selon l'une des revendications précédentes, lorsque ce programme est exécuté par un processeur.

14. Dispositif d'analyse de contenu d'un document structuré susceptible d'être déformé, le dispositif comprenant une interface de réception d'une première image (A1) montrant le document et d'une deuxième image (A2) montrant le document, et un module de traitement d'image (4) configuré pour :

  • mettre en correspondance de premiers points d'intérêt (P1A1) extraits dans la première image acquise (A1) avec des deuxièmes points d'intérêt (P2M2) d'une première image de référence (M1) montrant un premier modèle du document,
  • estimer d'une première transformation géométrique (TM1A1) tenant compte de déformations du document structuré montré dans la première image acquise par rapport au premier modèle, à partir des correspondances effectuées dans l'étape précédente,
  • déterminer au moins une première région à analyser dans la première image acquise (A1), par projection d'au moins une région de référence de la première image de référence au moyen de la première transformation (TM1A1),
• analyser le contenu de la première région déterminée,

le dispositif étant **caractérisé en ce que** le module de traitement d'image (4) est en outre configuré pour :

  • mettre en correspondance des troisièmes points d'intérêts (P3A2) extraits dans la deuxième image acquise (A2) avec des quatrièmes points d'intérêt (P4A1) extraits dans la première image acquise (A1),
  • estimer, à partir des correspondances effectuées dans l'étape précédente, une deuxième transformation géométrique (TA1A2) tenant compte de déformations du document montré dans la deuxième image acquise (A2) par rapport au document montré dans la première image acquise (A1),
  • estimer une troisième transformation géométrique (TM1A2) tenant compte de déformations du document montré dans la deuxième image acquise (A2) par rapport au premier modèle, dans lequel la troisième transformation est une composition de la première transformation géométrique (TM1A1) et de la deuxième transformation géométrique (TA1A2),
  • déterminer au moins une deuxième région à analyser dans la deuxième image acquise (A2) par projection de la région de référence de la première image de référence au moyen de la troisième transformation géométrique,
  • analyser le contenu de la deuxième région déterminée.

15. Dispositif d'analyse de contenu d'un document structuré susceptible d'être déformé, le dispositif comprenant une interface de réception d'une première image (A1) montrant le document et d'une deuxième image (A2) montrant le document, et un module de traitement d'image (4) configuré pour :

  • mettre en correspondance de premiers points d'intérêt (P1A1) extraits dans la première image acquise (A1) avec des deuxièmes points d'intérêt (P2M2) d'une première image de référence (M1) montrant un premier modèle du document,
  • estimer d'une première transformation géométrique (TM1A1) tenant compte de déformations du document structuré montré dans la première image acquise par rapport au premier modèle, à partir des correspondances effectuées dans l'étape précédente,
  • déterminer au moins une première région à analyser dans la première image acquise (A1), par projection d'au moins une région de référence de la première image de référence au moyen de la première transformation (TM1A1),
• analyser le contenu de la première région déterminée,

le dispositif étant **caractérisé en ce que** le module de traitement d'image (4) est en outre configuré pour :

• mettre en correspondance des troisièmes points d'intérêts (P3A2) extraits dans la deuxième image acquise (A2) avec des quatrièmes points d'intérêt (P4A1) extraits dans la première image acquise (A1),
• estimer, à partir des correspondances effectuées dans l'étape précédente, une deuxième transformation géométrique (TA1A2) tenant compte de déformations du document montré dans la deuxième image acquise (A2) par rapport au document montré dans la première image acquise (A1),
• mettre en correspondance des cinquièmes points d'intérêts (P5A2) extraits dans la deuxième image acquise (A2) avec des sixièmes points d'intérêt (P6M2) d'une deuxième image de référence (M2) montrant un deuxième modèle du document,
• estimer, à partir des correspondances effectuées dans l'étape précédente, une troisième transformation géométrique (TM2A2) tenant compte de déformations du document montré dans la deuxième image acquise (A2) par rapport au deuxième modèle,
• estimer une quatrième transformation géométrique (TM1A1') tenant compte de déformations du document montré dans la première image acquise (A1) par rapport au premier modèle, dans lequel la quatrième transformation est une composition de l'inverse (TA2A1) de la deuxième transformation (TA1A2), de la troisième transformation (TM2A2), et d'une cinquième transformation géométrique (TM1M2) prédéterminée tenant compte de déformations du deuxième modèle par rapport au premier modèle,
• déterminer au moins une deuxième région à analyser la première image acquise (A1) par projection de la région de référence de la première image de référence au moyen de la quatrième transformation géométrique,
• analyser le contenu de la deuxième région déterminée.

FIG. 1

FIG. 2

FIG. 3

M1

FIG. 4

E1 : Acquisition d'une image
« visible » d'un document
déformé

E1' : Acquisition d'image IR
d'un document déformé

E2 : Sélection d'une image de
référence montrant un modèle du
document

FIG. 5

E3 : Détermination d'une
transformation géométrique
globale

E4 : Détermination de région
d'intérêt de l'image acquise

E5 : Extraction de points d'intérêt
extraits dans/de la région
d'intérêt de l'image acquise

E11 : Extraction de points
d'intérêt extraits dans/de la
région d'intérêt de l'image
visible et de l'image IR

E6 : Mise en correspondance
des points d'intérêt extraits avec
les points d'intérêt stockés pour
chaque zone d'intérêt prise une
à une et estimation d'une
transformations pour chaque
zone d'intérêt

E12 : Mise en correspondance
des points d'intérêt extraits
avec les points d'intérêt
extraits de l'image couleur

E13 : Estimation d'une
transformation géométrique
par rapport au document de
référence

E8 : Estimation d'une
transformation géométrique
globale sur la base des mises
en correspondance

E9 : Détermination d'une région
à analyser de ladite image
couleur acquise

E14 : Détermination d'une
région à analyser de ladite
image IR acquise

E10 : Analyse de la région à
analyser de l'image couleur

E15 : Analyse de la région à
analyser de l'image IR

E18 Fusion

FIG. 6

FIG. 7

FIG. 8

FIG. 9

FIG. 10

E1 : Acquisition d'une image « visible » d'un document déformé

E1' : Acquisition d'image IR d'un document déformé

E1" : Acquisition d'image UV d'un document déformé

E2 : Sélection d'une image de référence montrant un modèle du document

E3 : Détermination d'une transformation géométrique globale

E4 : Détermination de région d'intérêt de l'image acquise

E5 : Extraction de points d'intérêt extraits dans/de la région d'intérêt de l'image acquise

E11 : Extraction de points d'intérêt extraits dans/de la région d'intérêt de l'image visible et de l'image IR

E6 : Mise en correspondance des points d'intérêt extraits avec les points d'intérêt stockés pour chaque zone d'intérêt prise une à une et estimation d'une transformations pour chaque zone d'intérêt

E12 : Mise en correspondance des points d'intérêt extraits avec les points d'intérêt extraits de l'image couleur

E13 : Estimation d'une transformation géométrique par rapport au document de référence

E8 : Estimation d'une transformation géométrique globale sur la base des mises en correspondance

E9 : Détermination d'une région à analyser de ladite image couleur acquise

E14 : Détermination d'une région à analyser de ladite image IR acquise

E16 : Détermination d'une région à analyser de ladite image UV acquise

E10 : Analyse de la région à analyser de l'image couleur

E15 : Analyse de la région à analyser de l'image IR

E17 Analyse de la région à analyser de l'image UV

E18 Fusion

FIG. 11

FIG. 12

Europäisches Patentamt

European Patent Office

Office européen des brevets

# RAPPORT DE RECHERCHE EUROPEENNE

Numéro de la demande

EP 18 16 5339

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/059316 A1 (IRWIN JR KENNETH E [US] ET AL) 5 mars 2009 (2009-03-05) * alinéas [0046] - [0052]; figures 15,18 * | 1-15 | INV. G06K9/00 G06K9/20 |
| X | DE 10 2013 101587 A1 (BUNDESDRUCKEREI GMBH [DE]) 21 août 2014 (2014-08-21) * alinéas [0005] - [0014], [0060] - [0071] * | 1-15 | |
| A | US 2005/078851 A1 (JONES ROBERT L [US] ET AL) 14 avril 2005 (2005-04-14) * alinéas [0027], [0031] - [0035], [0049]; figures 1,6 * | 1-15 | |
| A | US 2016/350592 A1 (MA JIYONG [US] ET AL) 1 décembre 2016 (2016-12-01) * alinéas [0109] - [0112], [0233], [0144] - [0148], [0161]; figures 3, 4 * | 1-15 | |
| A | Chelhwon Kim ET AL: "Dewarping Book Page Spreads Captured with a Mobile Phone Camera" In: "Network and Parallel Computing", 1 janvier 2014 (2014-01-01), Springer International Publishing, Cham 032548, XP055431471, ISSN: 0302-9743 ISBN: 978-3-642-35622-3 vol. 8357, pages 101-112, DOI: 10.1007/978-3-319-05167-3_8, * sect.III, IV; figures 2-7 * | 1-15 | DOMAINES TECHNIQUES RECHERCHES (IPC) G06K |
| A | NOBORU NAKAJIMA ET AL: "Video Mosaicing for Document Imaging", PROC. CBDAR, DEMO SESSION (2007)., 1 janvier 2007 (2007-01-01), XP055106029, * sect.2; figures 2-5 * | 1-15 | |

Le présent rapport a été établi pour toutes les revendications

| Lieu de la recherche | Date d'achèvement de la recherche | Examinateur |
|---|---|---|
| La Haye | 20 août 2018 | Darolti, Cristina |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 18 16 5339

La présente annexe indique les membres de la famille de brevets relatifs aux documents brevets cités dans le rapport de recherche européenne visé ci-dessus.

Lesdits members sont contenus au fichier informatique de l'Office européen des brevets à la date du

Les renseignements fournis sont donnés à titre indicatif et n'engagent pas la responsabilité de l'Office européen des brevets.

20-08-2018

| Document brevet cité au rapport de recherche | Date de publication | Membre(s) de la famille de brevet(s) | Date de publication |
|---|---|---|---|
| US 2009059316 A1 | 05-03-2009 | AU 2008293402 A1 | 05-03-2009 |
| | | CA 2697788 A1 | 05-03-2009 |
| | | CN 101883614 A | 10-11-2010 |
| | | CN 103861275 A | 18-06-2014 |
| | | CN 103873733 A | 18-06-2014 |
| | | EP 2185256 A1 | 19-05-2010 |
| | | EP 3177002 A2 | 07-06-2017 |
| | | ES 2618495 T3 | 21-06-2017 |
| | | US 2009059316 A1 | 05-03-2009 |
| | | US 2012250118 A1 | 04-10-2012 |
| | | WO 2009029772 A1 | 05-03-2009 |
| DE 102013101587 A1 | 21-08-2014 | DE 102013101587 A1 | 21-08-2014 |
| | | EP 2956915 A1 | 23-12-2015 |
| | | WO 2014125022 A1 | 21-08-2014 |
| US 2005078851 A1 | 14-04-2005 | US 2005078851 A1 | 14-04-2005 |
| | | US 2010208975 A1 | 19-08-2010 |
| | | US 2012288135 A1 | 15-11-2012 |
| US 2016350592 A1 | 01-12-2016 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 2952218

- WO 2011058418 A

**Littérature non-brevet citée dans la description**

- **FRANKE R.** Scattered data interpolation : tests of some methods. *mathematical of computation,* 1982, vol. 38 (157), 181-200